# EUROPEAN PATENT APPLICATION

(11) **EP 2 308 414 A1**
(43) Date of publication of application: **13.04.2011**
(21) Application number: 09172818.8
(22) Date of filing: 12.10.2009
(51) Int. Cl.: A61C 13/003

(54) **Dental prosthetic device and accessory thereof**

(71) Applicant: Dentapia Co. Ltd., Daegu (KR)
(72) Inventor: Gwon, Odal, Daegu (KR)
(74) Representative: Marchant, Michael John

(57) **Abstract**

Provided is a dental prosthetic device that is adapted for replacing a lost tooth and recovering a damaged tooth. An adjusting member is attached to a tooth adjacent to the lost or damaged tooth to adjust the slope and undercut of the adjacent tooth and to install an artificial tooth.

## Description

### BACKGROUND OF THE INVENTION

The present invention relates to an adjusting member (30) that is attached to a tooth to remove the undercut of the tooth, adjust the slope of the tooth, and secure the retention of a prosthetic device and the path of insertion of the prosthetic device, without removing the tooth, and relates to a prosthetic device coupled with the adjusting member (30), or used through overlaying with at least one portion of the adjusting member (30), or used for the adjusting member (30) to solely function, so as to perform a prosthetic operation without removing a tooth or with minimally removing a tooth. Thus, the present invention is quite different from the related art that requires removing a tooth before applying a prosthetic device. That is, the adjusting member (30) is attached without removing a tooth or is more easily placed in position with minimally removing a tooth, and obtains or improves retention, and removes the undercut of a tooth and corrects the slope of a tooth and secures the path of insertion and retention. Thus, prosthetic devices, including a band bridge (40), a band crown (41), a band-type fixed bridge (42) that is a new fixed-type bridge, and an abutment tooth (43) for a denture, can be fabricated, which are configured to perform a prosthetic operation without removing a tooth, or with minimally removing a tooth, unlike the related art requiring removing many teeth in replacing a lost tooth with a crown bridge (10), restoring a damaged tooth with a crown, installing a fixed-type prosthetic device (12) for fixing a tooth having a predetermined mobility, and fabricating an abutment tooth for a denture.

In general, to replace a lost tooth, the crown bridge (10) is used, which is adapted such that an adjacent abutment tooth (60) is partially removed to install a crown and connect an artificial tooth (50) to the crown.

At this point, a large portion of the tooth is removed to cause neurodegeneration of the tooth, pulp exposure, or hypersensitivity reaction, and it is difficult to find out an original occlusion condition since an occlusion surface of the adjacent abutment tooth (60) is removed. Particularly, when the slope or undercut of the tooth is great, a large portion of dentin is removed, so that an endodontic treatment may be required. When fabricating the adjacent abutment tooth (60) for securing the path of insertion and retention of a denture, or when installing a crown after a caries treatment, or when installing the fixed-type prosthetic device (12) fixing a plurality of teeth having a predetermined mobility, too many portions of teeth are also removed.

Implant prosthetic devices are also used, which are adapted such that an artificial dental root is implanted into an alveolar bone, and then osseointegration is induced to fix an artificial tooth. The implant prosthetic devices are expensive, and require a long treatment time, and a low resistance against a lateral pressure, and are inappropriate to patients having serious periodontal diseases, wasting diseases, heart diseases, diabetes, and blood disorders. Thus, a prosthetic device is desperately needed, which is adapted to replace a lost tooth, improve functions of a tooth, and extend lifespan thereof, without damaging an adjacent tooth, or with minimizing a damage to the adjacent tooth.

In the case of conventional prosthetic devices, a tooth used as the adjacent abutment teeth (60) must be partially removed to adjust the slope of the tooth and remove the undercut of the tooth. Various studies have been carried out to address this limitation, and thus some methods have been introduced. However, most of them, which have a low retention, are not especially appreciated in the art.

To address these limitations, the prosthetic device is provided with the adjusting member (30), the band (44), the band crown (41), the band-type fixed bridge (42), and the band bridge (40) according to an embodiment of the present invention. Further more, the prosthetic device is adapted to secure a residual tooth and replace the implant prosthetic device that is inappropriate to specific patients.

### SUMMARY OF THE INVENTION

It is an object of the present invention to provide a dental prosthetic device. This object can be achieved by the features of the independent claims. Further enhancements are characterized by the dependent claims. Embodiments of the present invention are directed to a prosthetic device adapted for recovering and improving the function of a tooth and extending the life span of the tooth without damage to a natural tooth or with minimizing the damage that is generated when replacing a lost tooth with a crown bridge (10), installing a crown on a damaged tooth such as a carious tooth or a fractured tooth, fabricating a fixed-type prosthetic device (12) fixing a tooth having a predetermined mobility, and fabricating an abutment tooth (13) for a denture.

Embodiments of the present invention are also directed to a prosthetic device correcting the slope or undercut of a tooth and securing the path of insertion and retention of the prosthetic device without removing a tooth or with minimally removing a tooth.

The problems in the related art are solved by attaching an adjusting member (30) to a tooth. That is, the adjusting member 30 is attached to an adjacent abutment tooth (60) to adjust the slope and undercut of the adjacent abutment tooth (60) and to secure the path of insertion and retention without damage to the adjacent abutment tooth (60) whereby a band or crown can be installed to the tooth with no or little grounding.

To easily place the adjusting member (30) in position and obtain the retention, the minimum portion of the tooth may be removed and the adjusting member (30) may be provided with a protrusion (21) corresponding to the tooth. When the adjusting member (30) is attached to the tooth to replace a lost tooth, a band bridge (40) may replace the lost tooth without removing the tooth or with minimally remove the tooth and the adjusting member (30) itself may function as the adjacent abutment tooth (60) for a denture.

In the case of a damaged tooth, the appearance and function of the damaged tooth is recovered just by attaching the adjusting member (30) to a tooth, without further removing a portion of the damaged tooth or with minimally removing the damaged tooth. A band crown (41) may be installed after attaching the adjusting member (30) to the tooth, so as to recover the appearance and function of the damaged tooth. In addition, a fixed-type bridge, i.e., a band-type fixed bridge (42) may fix a tooth having a predetermined mobility, by attaching a band (44) having a continuous shape to teeth with or without attaching the adjusting member (30) to the teeth.

### BRIEF DESCRIPTION OF THE DRAWINGS

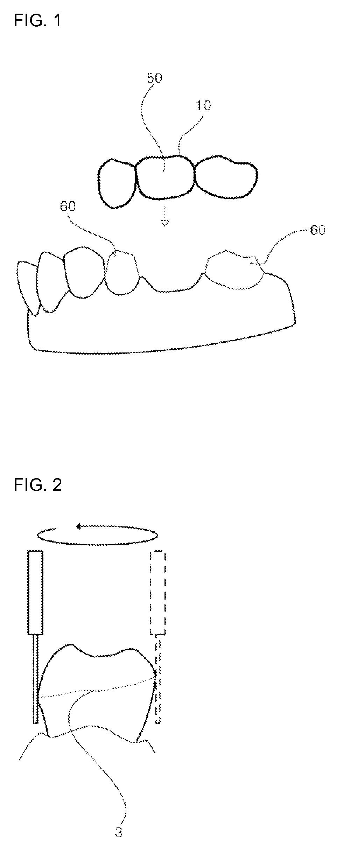

Fig. 1 illustrates a side view of a conventional crown bridge and partially removed adjacent teeth.

Fig. 2 illustrates a side view of a process of finding a survey line of a tooth using a surveyor according to one embodiment of the present invention.

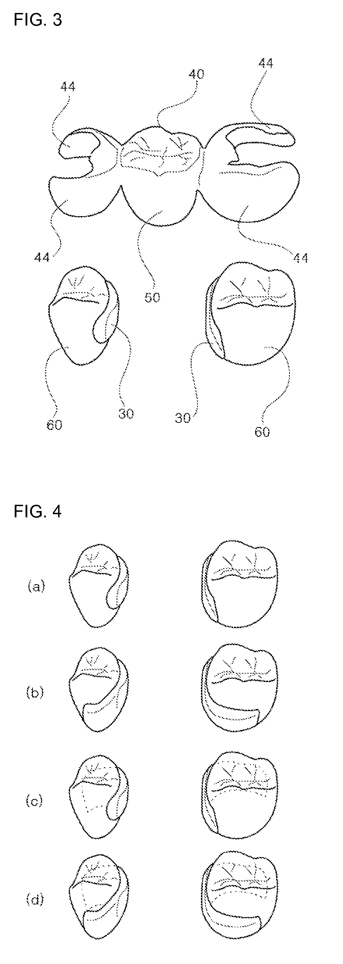

Fig. 3 illustrates a perspective view of a dental prosthetic device and an accessory thereof according to another embodiment of the present invention.

Fig. 4 illustrates a perspective view of adjusting members according to one embodiment of the present invention.

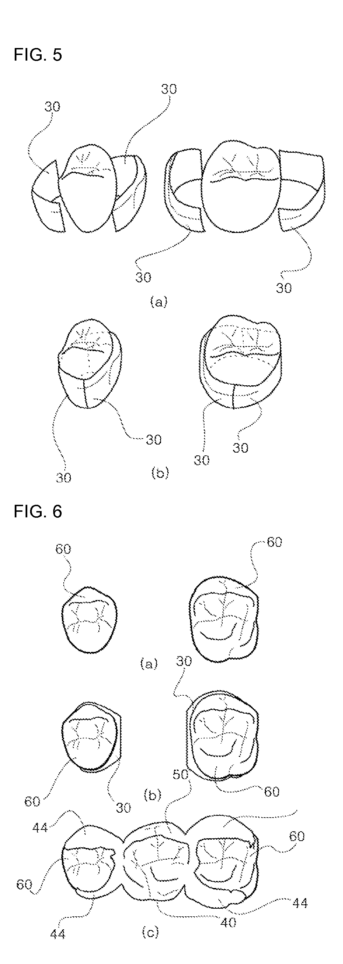

Fig. 5 illustrates a perspective view of adjusting members according to another embodiment of the present invention.

Fig. 6 illustrates a plan view of teeth adjacent to a removed tooth, adjusting members attached to the adjacent teeth, and a band bridge provided to the adjacent teeth according to one embodiment of the present invention.

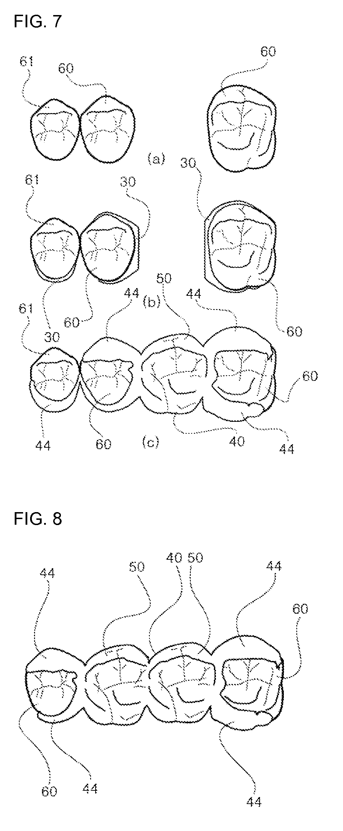

Fig. 7 illustrates a plan view of teeth adjacent to a removed tooth, adjusting members attached to the adjacent teeth, and a next tooth to the adjacent tooth, and a band bridge provided to the adjacent teeth according to one embodiment of the present invention.

Fig. 8 illustrates a plan view of a band bridge replacing a plurality of removed teeth according to one embodiment of the present invention.

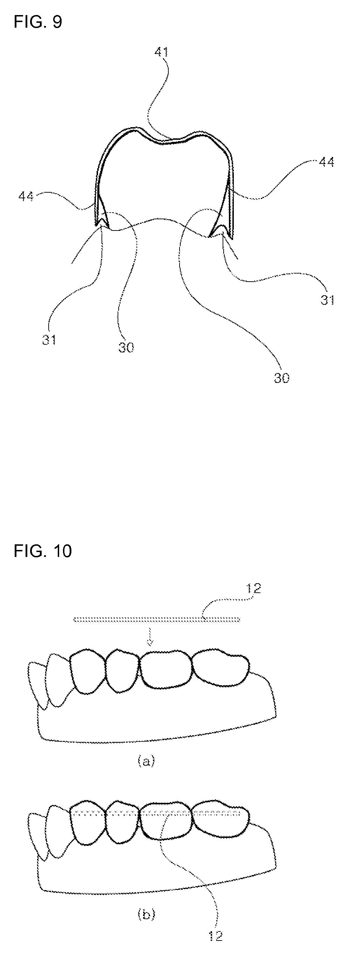

Fig. 9 illustrates a cross-sectional view of adjusting members and a band crown according to one embodiment of the present invention.

Fig. 10 illustrates a side view of a conventional fixed-type prosthetic device.

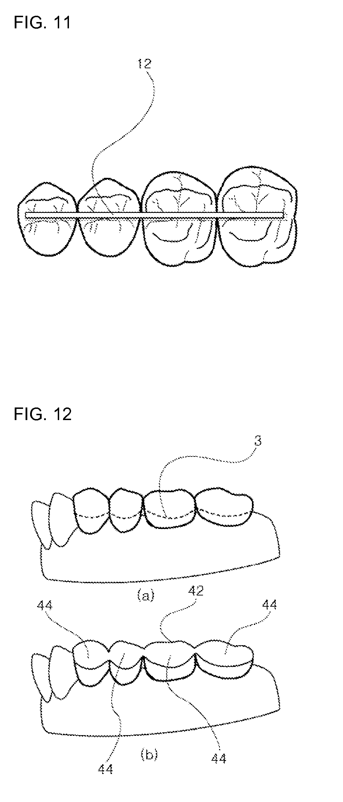

Fig. 11 illustrates a plan view of a conventional fixed-type prosthetic device.

Fig. 12 illustrates a side view of survey lines formed on teeth, and an install state of a band-type fixed bridge that is a new fixed-type prosthetic device, according to one embodiment of the present invention.

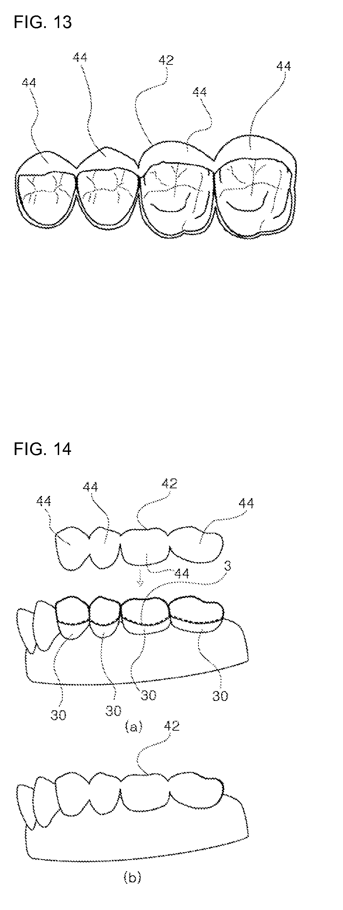

Fig. 13 illustrates a plan view of an install state of a band-type fixed bridge, according to one embodiment of the present invention.

Fig. 14 illustrates a side view of a band-type fixed bridge provided to teeth to which a plurality of adjusting members are attached, according to one embodiment of the present invention.

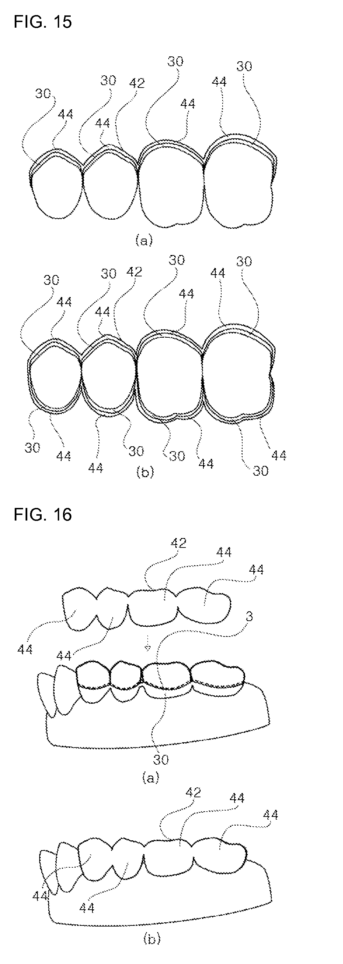

Fig. 15 illustrates a cross-sectional view of an install state of a band-type fixed bridge after attaching a plurality of adjusting members to at least one surface of bucco-lingual side surfaces, according to one embodiment of the present invention.

Fig. 16 illustrates a side view of an install state of a band-type fixed bridge after attaching adjusting members, integrally extending to a next tooth to an adjacent tooth, to teeth, according to one embodiment of the present invention.

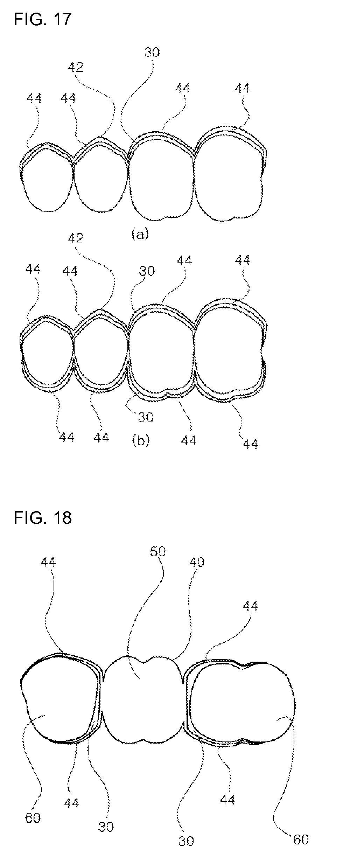

Fig. 17 illustrates a cross-sectional view of an install state of a band-type fixed bridge after attaching adjusting members, integrally extending to a next tooth to an adjacent tooth, to at least one of bucco-lingual side surfaces of teeth, according to one embodiment of the present invention.

Fig. 18 illustrates a cross-sectional view of adjusting members and a band bridge according to one embodiment of the present invention.

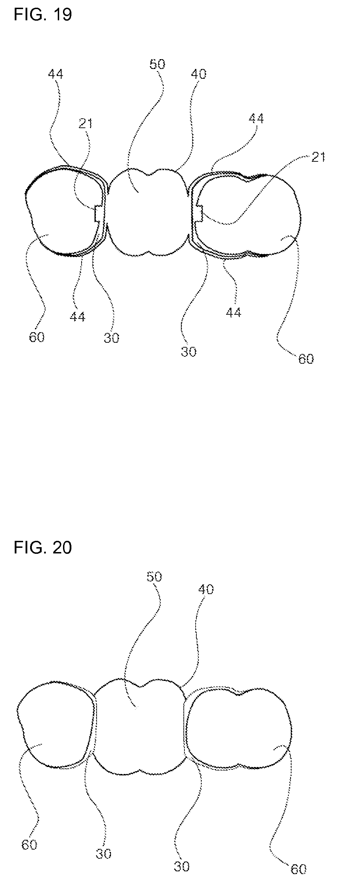

Fig. 19 illustrates a cross-sectional view of a band bridge to which adjusting members, provided with protrusions, are attached, according to one embodiment of the present invention.

Fig. 20 a cross-sectional view of a band bridge according to one embodiment of the present invention.

Fig. 21 illustrates a cross-sectional view of a band bridge and connected adjusting members according to one embodiment of the present invention.

Fig. 22 illustrates a cross-sectional view of a band bridge and connected adjusting members according to another embodiment of the present invention.

Fig. 23 illustrates a cross-sectional view of a band bridge and a connected adjusting member according to one embodiment of the present invention.

Fig. 24 illustrates a cross-sectional view of a band bridge and a connected adjusting member according to another embodiment of the present invention.

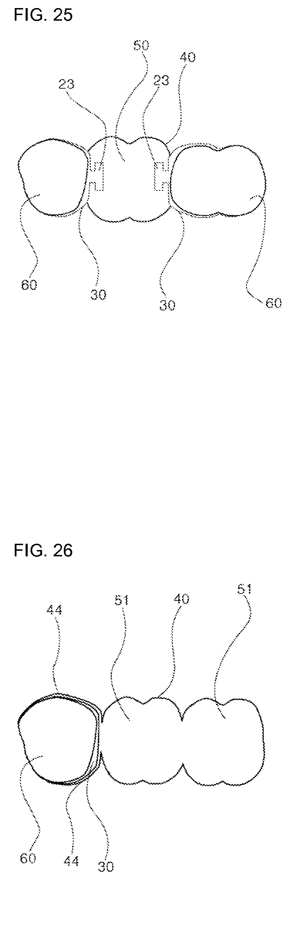

Fig. 25 illustrates a cross-sectional view of male parts provided to adjusting members and a band bridge according to one embodiment of the present invention.

Fig. 26 illustrates a cross-sectional view of dentures and a adjusting member used as an abutment tooth for the denture according to one embodiment of the present invention.

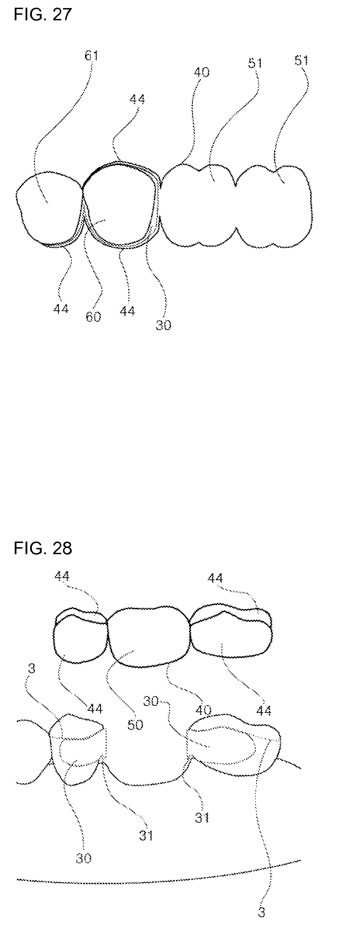

Fig. 27 illustrates a cross-sectional view of dentures and a adjusting member that is used as an abutment tooth for the denture and extends to a next tooth to an adjacent tooth according to one embodiment of the present invention.

Fig. 28 illustrates a side view of embrasures in adjusting members and a state after the adjusting members are attached before a band bridge is installed according to one embodiment of the present invention.

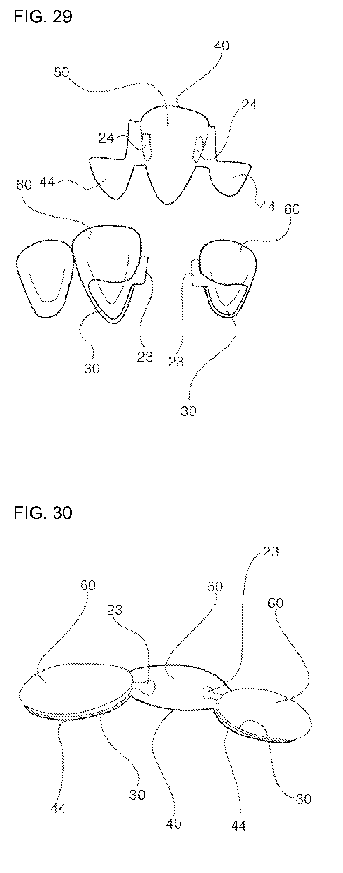

Fig. 29 illustrates a lingual view of anterior teeth, which includes adjusting members provided with male parts, and an artificial tooth provided with bands, according to one embodiment of the present invention.

Fig. 30 illustrates a cross-sectional view of an artificial tooth provided with adjusting members and a band bridge according to one embodiment of the present invention.

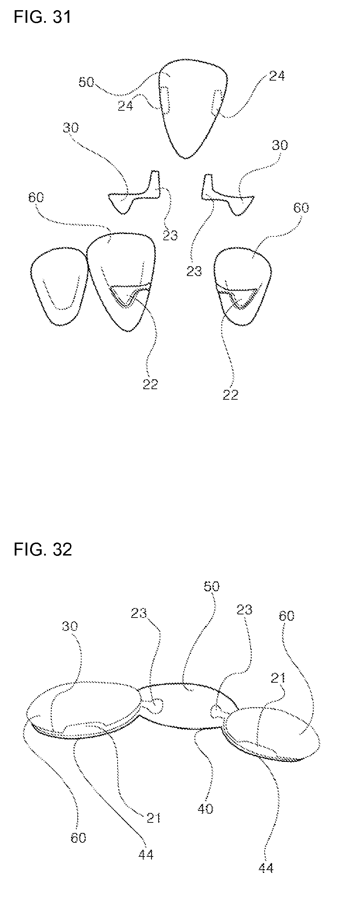

Fig. 31 illustrates a lingual view of anterior teeth including a band bridge that has adjusting members provided with protrusions and has an artificial tooth having no band, according to one embodiment of the present invention.

Fig. 32 illustrates a cross-sectional view of anterior teeth including adjusting members provided with protrusions and a band bridge according to one embodiment of the present invention.

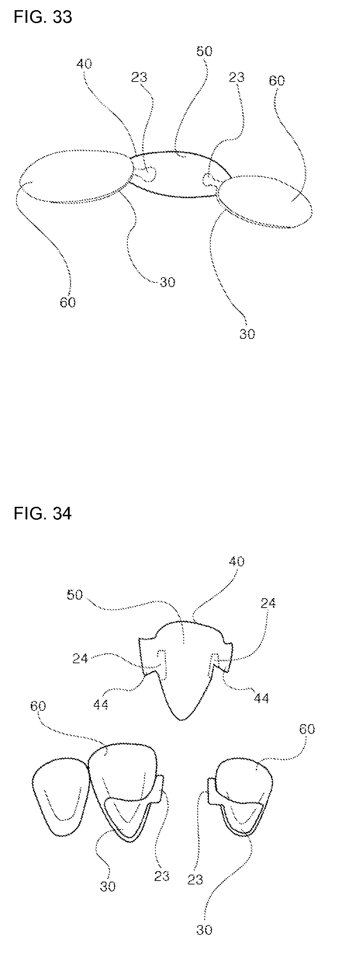

Fig. 33 illustrates a cross-sectional view of anterior teeth including adjusting members provided with male parts, and a band bridge having no band, according to one embodiment of the present invention.

Fig. 34 illustrates a lingual view of anterior teeth including an artificial tooth provided with adjusting members and bands, according to one embodiment of the present invention.

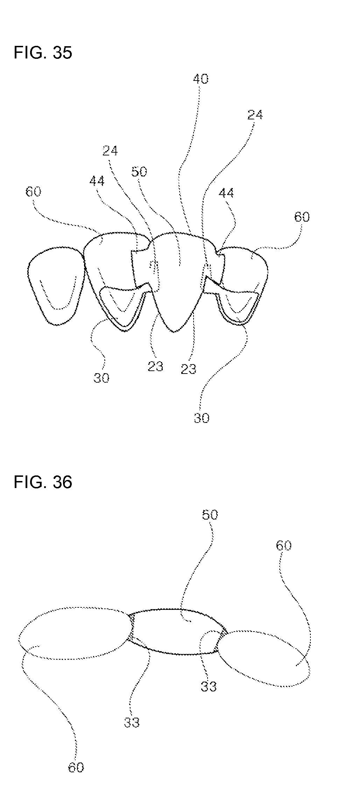

Fig. 35 illustrates a lingual view of anterior teeth including an artificial tooth provided with adjusting members and bands, according to another embodiment of the present invention.

Fig. 36 illustrates a cross-sectional view of overlay portions of adjacent teeth coupled to an artificial tooth according to one embodiment of the present invention.

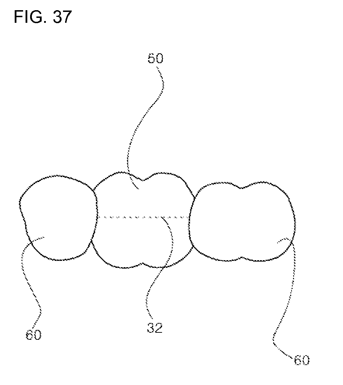

Fig. 37 illustrates a cross-sectional view of a distance between the maximum contour parts of adjacent teeth according to one embodiment of the present invention.

### DESCRIPTION OF SPECIFIC EMBODIMENTS

Hereinafter, a dental prosthetic device and an accessory of the dental prosthetic device in accordance with at least one embodiment of the present invention will be described in detail with reference to the accompanying drawings.

A conventional crown bridge 10 requires partially removing adjacent abutment teeth 60, to adjust the slope of the adjacent abutment teeth 60, remove the undercut of the adjacent abutment teeth 60, and secure the path of insertion of the crown bridge 10 and the retention of the crown bridge 10. In addition, it is difficult to reproduce an occlusion surface that must be removed before installing the crown bridge 10.

In the case of a conventional Maryland bridge that has the similar shape to a band bridge 40, since it is impossible to remove the undercut or adjust the slope of an anterior tooth part and a posterior tooth part, the retention of the Maryland bridge is not secured. Thus, the Maryland bridge is temporarily used in an alignment of teeth, or used as a temporary prosthetic device.

According to at least one embodiment of the present invention, the dental prosthetic device for recovering or improving the function of a damaged tooth is adapted such that adjusting members 30 are attached to teeth to adjust the slope and undercut of the teeth and secure the path of insertion of the prosthetic device and obtain the retention of the prosthetic device, without removing the teeth. These effects of the adjusting members 30 can also be obtained using a direct method for attaching resin to teeth used as an adjacent abutment tooth. That is, the adjusting member 30 is attached to a tooth to adjust the slope and the undercut of the tooth and secure the path of insertion of the prosthetic device, to provide the band bridge 40, a band crown 41, a band-type fixed bridge 42, and an abutment tooth 43 for a denture.

The function of the adjusting members 30 will now be described in more detail. In one case, the adjusting member 30 is attached only below a survey line 3, and in the other case, the adjusting member 30 is extended over the survey line 3. When the adjusting member 30 is attached only below the survey line 3, the adjusting member 30 corrects the slope and under cut of a tooth and secures retention and the path of insertion. In a case where the size of the adjusting member 30 is small because the slope and undercut of a tooth are small, the retention, provided just by the adjusting member 30, is small. Thus, the adjusting member 30 is extended over the survey line 3 to improve the retention of the adjusting member 30. For the adjusting members 30 to have a retention function that is performed by bands 44, the adjusting members 30 extend to the bands 44. The adjusting member 30 performing the above functions is used for fixing a tooth, replacing a lost tooth, and recovering a damaged tooth, and also used for the abutment tooth 43 of a denture. Even when there is an obstacle, the adjusting member 30 is attached to a tooth by using its elasticity. In the case where a tooth is overlaid with the adjusting member 30 extended over the survey line 3, and the band 44 is attached to the adjusting member 30, the adjusting member 30 retains the band 44 by itself, besides the functions of correcting the slope and under cut of the tooth, and securing the path of insertion and retention. Even in this case, the adjusting member 30 can be attached to a tooth having an obstacle, by using its elasticity. The adjusting members 30 are used to fix a tooth, replace a lost tooth, recover a damaged tooth, and fabricate the abutment tooth 43 for dentures 51.

A tooth is partially removed in various shapes for the adjusting member 30 to perform its functions at its own position. Accordingly, the inner surfaces of the adjusting members 30 may be provided with protrusions 21 corresponding to a removed shape of the tooth. The adjusting members 30 may be provided with male parts 23 disposed in various shapes and various directions such that the adjusting members 30 are coupled to an artificial tooth 50 through the male parts 23 and female parts 24. The adjusting member 30 is limited to a proximal surface of one tooth, or extends to a bucco-lingual side of the tooth, or entirely surrounds the tooth. Furthermore, the adjusting member 30 may be attached to a plurality of adjacent teeth to improve retention. At this point, the adjusting member 30, attached to the teeth, may be provided in plurality. Alternatively, the adjusting member 30 may be attached to one tooth, or the adjusting members 30 may be attached to one tooth.

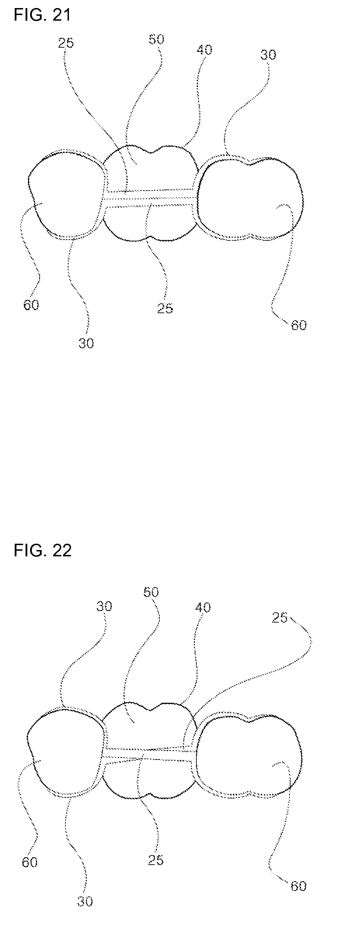

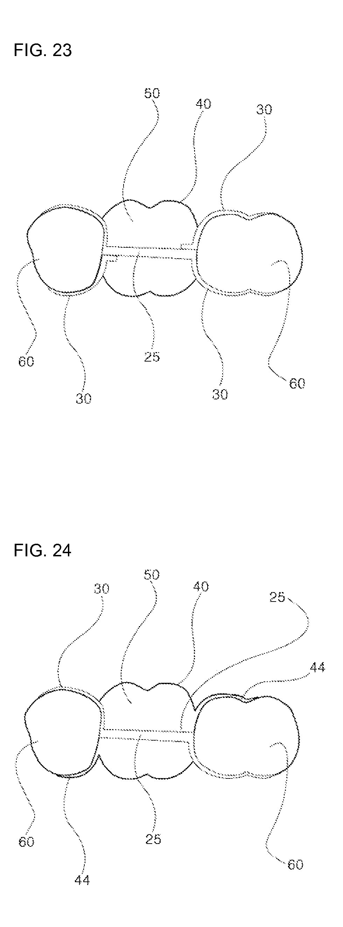

Referring to Fig. 24, the adjusting member 30 may be provided with a connecting adjusting member 25 that connects the adjusting member 30 attached to a lingual side surface of one of the adjacent abutment teeth 60, to the adjusting member 30 attached to a bucco-side surface of another of the adjacent abutment teeth 60. Alternatively, referring to Fig. 23, the connecting adjusting member 25 may, in another manner, connect the adjusting member 30 attached to a bucco-side surface of one of the adjacent abutment teeth 60, to the adjusting member 30 attached to a lingual side surface of another of the adjacent abutment teeth 60. Alternatively, referring to Fig. 22, the connecting adjusting member 25 may be provided in plurality, crossing each other to be attached to the adjacent abutment teeth 60. Alternatively, referring to Fig. 21, a first one of the connecting adjusting members 25 may connect the adjusting member 30 attached to a lingual-side surface of one of the adjacent abutment teeth 60, to the adjusting member 30 attached to a lingual-side surface of another of the adjacent abutment teeth 60, and a second one of the connecting adjusting members 25 may connect the adjusting member 30 attached to a bocco-side surface of one of the adjacent abutment teeth 60, to the adjusting member 30 attached to a bocco-side surface of another of the adjacent abutment teeth 60, and the first and second connecting adjusting members 25 may be disposed in parallel to be attached to the adjacent abutment teeth 60. Even in this case, the bucco and lingual-side surfaces and at least one portion of an occlusion surface are simultaneously overlaid with the adjusting member 30.

The adjusting member 30 is attached below the survey line 3 on bucco and lingual sides and a proximal surface of a tooth to adjust the slope and undercut of the tooth. The whole of the tooth may be overlaid with the adjusting member 30, or an upper side of a contour part of the teeth may be further overlaid by the adjusting member 30.

The adjusting member 30 may be provided with embrasures 31 having various shapes to improve periodontal health.

When a lost tooth is replaced, the adjusting members 30 are provided with the male parts 23, and the artificial tooth 50 is provided with the female parts 24 having the corresponding shapes to the male parts 23, so that the male parts 23 are coupled to the female parts 24. Alternatively, the adjusting member 30 without the male part 23 may be attached to the adjacent abutment tooth 60 to replace a lost tooth. Alternatively, the adjusting member 30 having the male part 23 may be attached to one side of a tooth, and the adjusting member 30 without the adjusting member 23 may be attached to the other side of the tooth, to replace a lost tooth.

The artificial tooth 50 for an area requiring great retention is longer than the distance between the maximum contour parts of adjacent abutment teeth, so that a portion of the adjacent abutment teeth is overlaid with the artificial tooth 50. In the case of an anterior tooth part, the portion of the adjacent abutment teeth overlaid with the artificial tooth 50 may be disposed on both a lingual side and a labial side of the anterior tooth part, so as to prevent the artificial tooth 50 from being removed. Alternatively, an only labial size of the artificial tooth 50 may be increased, so that the artificial tooth 50 is prevented from being removed from the labial side to the lingual side by a portion of the artificial tooth 50 with which the labial side of the adjacent tooth is overlaid, and the artificial tooth 50 is prevented from being removed from the lingual side to the labial side by the adjusting members 30. The artificial tooth 50 may be formed integrally with the bands 44 and attached to the adjacent abutment teeth 60, to prevent the removal of the artificial tooth 50. The lingual side size of the artificial tooth 50 in a posterior tooth part is greater than a distance 32 between the maximum contours of the adjacent abutment teeth 60 to prevent the removal of the artificial tooth 50. When retention is sufficient in the anterior tooth part and the posterior tooth part, the overlaying may be not performed.

The adjusting members 30 are attached to teeth, so as to adjust the slopes and undercut of the teeth and secure retention and the path of insertion, and then non-functional cusps and pits of the teeth, occlusion surfaces of the teeth, the occlusion surfaces being not in contact with antagonists, at least one portion of proximal surfaces, bocco-side surfaces and lingual-side surfaces of the teeth, and the whole of the teeth are overlaid with the bands 44. At this point, the bands 44 are directly attached to the adjusting members 30 or to the teeth.

When a lost tooth is replaced with the band bridge 40 including an artificial tooth integrally with the bands 44, the adjusting members 30, fabricated using the direct method or other methods, are attached to teeth to adjust the slopes and undercut of the teeth and secure a retention and the path of insertion, and then the band bridge 40 is installed.

The band 44 may extend such that a plurality of adjacent teeth can be integrally overlaid with the band 44. At this point, non-functional cusps and pits of the teeth, occlusion surfaces of the teeth, which are not in contact with antagonists, at least one portion of proximal surfaces, bocco-side surfaces and lingual-side surfaces of the teeth, and the whole of the teeth may be overlaid with the band 44.

The adjusting member 30 may be attached to the adjacent abutment tooth 60 to adjust the slope and undercut of the adjacent abutment tooth 60, so that the adjacent abutment tooth 60 functions the abutment tooth 43 for the denture 51, i.e., secures the path of insertion and retention. Alternatively, various retention members, including an attachment and a key-and-keyway-type device, may be attached to the adjusting member 30 to improve retention.

When the appearance and the function of a damaged tooth are recovered, since the adjusting member 30 is attached to a tooth, it is not required to additionally remove the tooth, or the tooth is minimally removed. The appearance and the function of the damaged tooth may be recovered only with the adjusting member. Even when the tooth has an obstacle, the adjusting member 30 can be attached to the tooth because of its elasticity. When the slope and undercut of a tooth are great, the adjusting member 30 is attached to the tooth to adjust the slope and undercut and then retention and the path of insertion are secured to restore at least one portion of a damaged tooth with the band crown 41 installed.

To fix a tooth having a predetermined mobility, the band-type fixed bridge 42 may be used, which are adapted such that the adjusting members 30 are attached to teeth to adjust the slopes and undercut of the teeth and secure retention and the path of insertion, and then the bands 44 are installed on the teeth, and the bands 44 extend to connect the adjacent teeth to each other, in the manner of overlaying non-functional cusps of and pits of the teeth, occlusion surfaces of the teeth, which are not in contact with antagonists, at least one portion of bocco-side surfaces and lingual-side surfaces of the teeth, and the whole of the teeth. When the slopes and undercut are not serious, or when it is not difficult to secure the retention and the path of insertion, the band-type fixed bridge 42 may be installed on the teeth without the attaching of the adjusting members 30. In this case, the band-type fixed bridge 42 is fabricated in the manner of overlaying at least one portion of the teeth. The band-type fixed bridge 42 may be fabricated in a manner of overlaying non-functional cusps disposed on bocco and lingual sides, and surfaces that are not in contact with antagonists, only with the adjusting members 30.

The fears in a dental treatment are removed, so as to elicit positive responses from patients and create the consumption of potential patients. In addition, working processes in dental laboratory are easy to perform, so that computer aided design/computer aided manufacturing (cad/cam) systems can be used to emerge from hand-crafting processes, thereby improving oral health and remarkably reducing fees for dental treatment.

Further more, special medical instruments and cementation may be developed for the present invention.

Accordingly, a dental treatment may be performed without removing a tooth or with minimally removing a tooth, so as to remove the fears in the dental treatment. Also, a tooth enamel, which is the hardiest part of a tooth, is protected so as to reduce secondary dental caries, and the most part of an occlusion surface is protected so as to maintain a current occlusion state or recover a lost occlusion surface. Also, a tooth is prevented from being damaged by inappropriate tooth removal. Also, the most part of an occlusion surface is protected so as to remarkably reduce occlusal interference and foreign body sensation.

While the present invention has been described with respect to the specific embodiments, it will be apparent to those skilled in the art that various changes and modifications may be made without departing from the scope of the invention as defined in the following claims.

## Claims

1. A dental prosthetic device comprising:
an adjusting member (30) being attachable to a tooth and configured to surround an original surface of a part or a whole of the tooth with no or little grounding thereof;
a band bridge (40) including an artificial tooth (50) formed integrally with a band (44) being configured in a manner of overlaying a part or a whole of the tooth,
wherein the adjusting member (30) is configured to adjust an under-cut or a slope of the tooth whereby the band bridge (40) can be installed to the tooth with no or little grounding thereof.

2. The dental prosthetic device of claim 1, wherein the band (44) is provided in a manner of overlaying one of a non-functional cusp of the tooth, a pit of the tooth, an occlusion surface of the tooth, the occlusion surface being not in contact with an antagonist, at least one portion of a proximal surface, a bocco-side surface and a lingual-side surface of the tooth, and the whole of the tooth.

3. The dental prosthetic device of claim 1, wherein the adjusting member (30) is provided to overlay one of the groups consisting of proximal surface of the tooth; the bocco-side surface or the lingual-side surface of the tooth; the whole of the tooth; the whole of the tooth and an adjacent tooth to the tooth by sequentially extending the adjusting member to the adjacent tooth; and a combination thereof.

4. The dental prosthetic device of claim 1, wherein the adjusting member (30) has a metal characteristic, so that one of a lower side of a contour part of the tooth, the lower side and an upper side of the contour part, and the whole of the tooth is overlaid with the adjusting member (30) even when the adjusting member (30) is partially caught by an obstacle.

5. The dental prosthetic device of claim 1, wherein the adjusting member (30) is provided with an embrasure for periodontal health so as to protect an interdental papilla, improve self-purification, and easily use an interdental brush.

6. The dental prosthetic device of claim 1, wherein the artificial tooth (50), coupled to the band (44) for replacing a lost tooth, has a labial side and a bocco side, and
the labial side and the bocco side are longer than a distance between contour parts of adjacent teeth to overlay a portion of the adjacent teeth with the artificial tooth, or
only the labial side is longer than the distance between the contour parts to overlay the adjacent teeth with the artificial tooth.

7. A dental prosthetic device for fixing a tooth having mobility, the dental prosthetic device comprising:
an adjusting member (30) being attachable to the tooth and configured to surround an original surface of a part or a whole of the tooth with no or little grounding;
a band-type fixed bridge (42) including a band (44) attachable directly to the tooth and an adjacent tooth thereto, or attached to the adjusting member (30) so as to fix the tooth having mobility, the band (44) being configured in a manner of integrally overlaying one of a non-functional cusp of the tooth, an occlusion surface of the tooth, the occlusion surface being not in contact with an antagonist, and at least one portion of a bocco-side surface and a lingual-side surface of the tooth, and a plurality of adjacent teeth,
wherein the adjusting member (30) is configured to adjust an under-cut or a slope of the tooth whereby the band-type fixed bridge (42) can be installed to the tooth with no or little grounding.

8. A dental prosthetic device comprising:
an adjusting member (30) being attachable to a tooth and configured to surround an original surface of a part or a whole of the tooth with no or little grounding; and
a band crown (41) providable in a manner of overlaying a portion or the whole of the tooth, and attachable directly to the tooth or attached to the adjusting member (30), so as to recover the tooth,
wherein the adjusting member (30) is configured to adjust an under-cut or a slope of the tooth whereby the band crown (41) can be installed to the tooth with no or little grounding.
